# EUROPÄISCHE PATENTANMELDUNG

(11) **EP 1 865 223 A2**
(43) Veröffentlichungstag der Anmeldung: **12.12.2007**
(21) Anmeldenummer: 07009939.5
(22) Anmeldetag: 18.05.2007
(51) Int. Cl.: F16G 13/02, F16G 5/18

(54) **Laschenkette**

(30) Priorität: 10.06.2006 DE 102006026986
(71) Anmelder: LuK Lamellen und Kupplungsbau Beteiligungs KG, 77815 Bühl (DE)
(72) Erfinder: Triller, Andreas, 77815 Bühl (DE); Vornehm, Martin, Wooster, Ohio 44691 (US)

(57) **Zusammenfassung**

Die Erfindung betrifft eine Laschenkette für insbesondere einen Fahrzeugantrieb, mit einer Vielzahl von über Druckstücke (3) gelenkig miteinander verbundenen Kettenlaschen, wobei die Druckstücke (3) quer zur Längsrichtung der Laschenkette (5) verlaufen und in Öffnungen der Kettenlaschen (7) angeordnet sind und an den Druckstücken (3) und den Kettenlaschen (7) jeweilige gekrümmt ausgebildete Anlageflächen angeordnet sind, entlang derer die Druckstücke und Kettenlaschen zur Kraftübertragung aneinander anliegen und die Anlageflächen am in Druckstückhöhenrichtung oberen und unteren Kontaktflächenbereich zwischen Druckstück und Kettenlasche vorgesehen sind und an den Druckstücken (3) gekrümmt ausgebildete Wälzflächen angeordnet sind, entlang derer die Druckstücke (3) zur Kraftübertragung aneinander abwälzen und sich die Wälzflächen in einem in Längsrichtung der Laschenkette (5) durch einen Schwerpunkt (S) des Druckstückes verlaufenden Querschnitt in einen oberen Bereich oberhalb und einen unteren Bereich unterhalb der Querschnittsebene erstrecken, wobei das Verhältnis aus dem Abstand (Wo) des Endes des oberen Bereichs zum Schwerpunkt (S) und dem Abstand (Wu) des Endes des unteren Bereiches zum Schwerpunkt in einem Bereich von etwa 1,1 bis etwa 2 liegt.

## Beschreibung

Die vorliegende Erfindung betrifft eine Laschenkette für insbesondere einen Fahrzeugantrieb, mit einer Vielzahl von über Druckstücke gelenkig miteinander verbundenen Kettenlaschen, wobei die Druckstücke quer zur Längsrichtung der Laschenkette verlaufen und in Öffnungen der Kettenlaschen angeordnet sind und an den Druckstücken und den Kettenlaschen jeweilige gekrümmt ausgebildete Anlageflächen angeordnet sind, entlang derer die Druckstücke und Kettenlaschen zur Kraftübertragung aneinander anliegen und die Anlageflächen am in Druckstückhöhenrichtung oberen und unteren Kontaktflächenbereich zwischen Druckstück und Kettenlasche vorgesehen sind und an den Druckstücken gekrümmt ausgebildete Wälzflächen angeordnet sind, entlang derer die Druckstücke zur Kraftübertragung aneinander abwälzen und sich die Wälzflächen in einem in Längsrichtung der Laschenkette durch einen Schwerpunkt des Druckstückes verlaufenden Querschnitt in einen oberen Bereich oberhalb und einen unteren Bereich unterhalb der Querschnittsebene erstrecken.

Eine solche, beispielsweise in einem Kegelscheibenumschlingungsgetriebe eingesetzte Laschenkette wird auch als Wiegegelenkkette bezeichnet, wobei die Wiegegelenke oder Druckstücke Wälzflächen aufweisen, mit denen sie, paarweise in Laschenöffnungen der Kettenlaschen angeordnet, aufeinander abwälzen und dabei die von der Laschenkette übertragene Zugkraft in der Form von Druckspannungen aufnehmen und als Reaktionskraft hierauf entsprechende Kräfte in die Kettenlasche einleiten, wobei die Kraftübertragung zwischen den Druckstücken und den Kettenlaschen an gekrümmt ausgebildeten Anlageflächen stattfindet, die an den Druckstücken und den Kettenlaschen ausgebildet sind.

Läuft nun die Laschenkette in einem Kegelscheibenumschlingungsgetriebe um, so geht die Laschenkette beim Einlaufen in ein Kegelscheibenpaar von einer langgestreckten Lage in eine abgewinkelte Lage über und die Kettenlaschen erfahren an ihrem sogenannten oberen Bügel und unteren Bügel unterschiedliche Zugkraftbeaufschlagungen. Diese Zugkräfte besitzen dabei beim Lauf der Laschenkette während eines vollständigen Umlaufs steil ansteigende Peakbelastungen, die die Materialbelastung erhöhen und somit eine negative Auswirkung auf die Lebensdauer der Laschenkette oder die Momentenübertragungskapazität besitzen.

Da die zwischen den einzelnen Druckstücken an der Wälzfläche übertragenen Druckkräfte von den Druckkräften im Bereich der Anlageflächen in die Kettenlaschen eingeleitet werden, kommt es hier zu entsprechenden Druckkraftübertragungen mit daraus resultierenden hohen Flächenpressungen. Werden diese Flächenpressungen zu hoch, kann ein Fließen im Bereich der Anlageflächen der Kettenlaschen auftreten und damit wiederum eine Lebensdauerbegrenzung oder eine Momentenübertragungskapazitätsbegrenzung einhergehen.

Die Druckstücke liegen mit ihren gekrümmt ausgebildeten Wälzflächen aneinander an und üben eine Gelenkfunktion aus derart, dass der in einer Schnittansicht senkrecht zur Laufrichtung der Laschenkette betrachtete Wälzpunkt zwischen den Wälzflächen einander gegenüberliegender Druckstücke während einer Abwälzbewegung beim Umlauf der Kette um zwei im Abstand zueinander angeordnete Kegelscheibenpaare eine Verlagerung erfährt zwischen einem oberen Bereich oberhalb und einem unteren Bereich unterhalb einer virtuellen, durch den Schwerpunkt in Längsrichtung der Laschenkette verlaufenden Querschnittsebene.

Die so definierte Wälzfläche liegt bei Druckstücken bekannter Laschenketten symmetrisch oberhalb und unterhalb des Schwerpunktes des Druckstücks. Es bedeutet dies mit anderen Worten, dass sich die in Druckstückhöhenrichtung betrachtete Länge der Wälzfläche bei bekannten Druckstücken symmetrisch zu einer durch den Schwerpunkt in Laufrichtung der Laschenkette verlaufenden Querschnittsebene erstreckt. Diese Ausbildung der Wälzfläche wurde bei bekannten Laschenketten in der Annahme getroffen, dass dadurch eine entsprechende symmetrische Last und damit Kraftverteilung an den Kettenlaschen im Bereich der oberen und unteren Anlageflächen erreicht wird.

Es hat sich aber nun gezeigt, dass diese Ausbildung der Wälzflächen an den Druckstücken weitgehend symmetrisch zum Schwerpunkt der Druckstücke zu einer deutlich ungleichmäßigen Flächenpressungsbelastung an den Anlageflächen der Kettenlaschen im oberen und unteren Anlageflächenbereich führt dergestalt, dass die Pressungen in den unteren Anlageflächen, also dem Übergangsbereich des unteren, achsnahen Bügels der Kettenlaschen, deutlich höher sind als die Flächenpressungen im oberen Anlageflächenbereich, also im Bereich zwischen den Anlageflächen der Druckstücke und den Anlageflächen des oberen Bügels der Kettenlaschen.

Aufgabe der vorliegenden Erfindung ist es nun, die Laschenkette derart weiterzubilden, dass es zu einer gleichmäßigeren Pressungsbelastung zwischen den unteren und oberen Anlageflächen der Kettenlaschen kommt und damit die Lebensdauer der Laschenkette erhöht werden kann bzw. die Momentübertragungskapazität der Laschenkette erhöht werden kann.

Die Erfindung weist nunmehr zur Lösung dieser Aufgabe die im Anspruch 1 angegebenen Merkmale auf. Vorteilhafte Ausgestaltungen hiervon sind in den weiteren Ansprüchen beschrieben.

Die Erfindung sieht nunmehr eine Laschenkette vor für insbesondere einen Fahrzeugantrieb, mit einer Vielzahl von über Druckstücke gelenkig miteinander verbundenen Kettenlaschen, wobei die Druckstücke quer zur Längsrichtung der Laschenkette verlaufen und in Öffnungen der Kettenlaschen angeordnet sind und an den Druckstücken und den Kettenlaschen jeweilige gekrümmt ausgebildete Anlageflächen angeordnet sind, entlang derer die Druckstücke und Kettenlaschen zur Kraftübertragung aneinander anliegen und die Anlageflächen am in Druckstückhöhenrichtung oberen und unteren Kontaktflächenbereich zwischen Druckstück und Kettenlasche vorgesehen sind und an den Druckstücken gekrümmt ausgebildete Wälzflächen angeordnet sind, entlang derer die Druckstücke zur Kraftübertragung aneinander abwälzen und sich die Wälzflächen in einem in Längsrichtung der Laschenkette durch einen Schwerpunkt des Druckstückes verlaufenden Querschnitt in einen oberen Bereich oberhalb und einen unteren Bereich unterhalb der Querschnittsebene erstrecken, wobei das Verhältnis aus dem Abstand des Endes des oberen Bereichs zum Schwerpunkt und dem Abstand des Endes des unteren Bereichs zum Schwerpunkt in einem Bereich von etwa 1,1 bis etwa 2 liegt.

Die Erfindung schafft also eine Laschenkette mit Druckstücken, deren Wälzfläche relativ zu einer Querschnittsebene, die in Längsrichtung der Laschenkette verläuft und durch den Schwerpunkt eines Druckstücks läuft, in Druckstückhöhenrichtung betrachtet in Richtung nach oben verlagert worden ist und sich somit nicht mehr symmetrisch zum Schwerpunkt erstreckt, in einer Projektion in Druckstückhöhenrichtung betrachtet aber den Schwerpunkt noch einschließt, sodass der obere Bereich oberhalb der Querschnittsebene ein Ende besitzt, dessen Abstand zum Schwerpunkt etwa 1,1 bis etwa 2-mal so groß ist wie der Abstand des Endes unteren Bereichs der Wälzfläche zum Schwerpunkt.

Die so erfindungsgemäß ausgebildete Laschenkette führt dazu, dass einerseits die Flächenpressungen in den unteren Anlageflächen zwischen den Druckstücken und den Kettenlaschen kleiner werden, also so, wie dies bei den bekannten Laschenketten bereits beabsichtigt war, die Flächenpressungen in den unteren Anlageflächen und den oberen Anlageflächen betragsmäßig keine so großen Unterschiede mehr besitzen und damit sich die Lebensdauer der Laschenkette bzw. ihre Momentenübertragungskapazität erhöht hat und andererseits auch die Zugkraftbelastung auf dem oberen Bügel und dem unteren Bügel der Kettenlasche beim Umlauf der Laschenkette an einem Paar beabstandeter Kegelscheibenpaare kleiner wird und somit die maximal auftretenden Zugkräfte in den Kettenlaschen geringer werden, was beispielsweise dazu genutzt werden kann, die Momentenübertragungskapazität der erfindungsgemäßen Laschenkette gegenüber bekannten Laschenketten zu erhöhen und somit die Laschenkette an einem Fahrzeugantrieb eingesetzt werden kann, der beispielsweise von einer Brennkraftmaschine mit hohem Drehmoment angetrieben wird.

Um nun das vorstehend beschriebene Abstandverhältnis zu erreichen, ist es nach einer Weiterbildung der Erfindung vorgesehen, dass die Wälzfläche des Druckstückes derart ausgebildet ist, dass das Ende des oberen Bereichs bei maximalem Knickwinkel der Laschenkette eine Abstand zum Schwerpunkt des Druckstückes besitzt, der etwa dem 1,1 bis 2-fachen Abstand des Endes des unteren Bereiches zum Schwerpunkt bei gestreckter oder in zur Richtung bei maximalem Knickwinkel entgegengesetzter Richtung gekrümmter Laschenkette entspricht.

Läuft die Laschenkette in den Bereich zwischen einem Kegelscheibenpaar ein und geht von einem langgestreckten Zustand in eine abgewinkelten Zustand über, so verlagert sich der Wälzpunkt zwischen zwei gegenüberliegenden Druckstücken in Druckstückhöhenrichtung betrachtet vom Schwerpunkt des Druckstücks weg in Richtung nach oben und geht dann, wenn die Laschenkette aus dem Bereich zwischen dem Kegelscheibenpaar wieder ausläuft und wieder eine langgestreckte Lage einnimmt, in einen Bereich unterhalb des Schwerpunkts über.

Wird nun der Abstand des oberen Bereichs der Wälzfläche, entlang dem der Wälzpunkt zwischen einem Paar gegenüberliegender Druckstücke entlang wandert, zum Schwerpunkt eines Druckstückes gemessen und mit dem Abstand des unteren Endes der Wälzfläche zum Schwerpunkt verglichen, so ist es nach der Erfindung vorgesehen, dass der obere Abstand, also der Abstand des Endes des oberen Bereichs der Wälzfläche zum Schwerpunkt etwa 1,1 bis 2-mal so groß ist wie der Abstand des unteren Endes der Wälzfläche zum Schwerpunkt.

Dies kann nun beispielsweise durch die vorstehend beschriebene entsprechende Ausbildung der Wälzfläche am Druckstück erreicht werden, beispielsweise dadurch, dass die Wälzfläche am Druckstück in Druckstückhöhenrichtung in Richtung oberhalb des Schwerpunkts verlagert wird, aber in einer Projektion auf die Druckstückhöhenrichtung betrachtet den Schwerpunkt des Druckstücks noch einschließt.

Alternativ hierzu ist es auch möglich, die Laschenkette derart weiterzubilden, dass die Druckstücke an den Anlageflächen der Kettenlaschen derart anliegen, dass das Verhältnis aus dem Abstand des Endes des oberen Bereichs zum Schwerpunkt und dem Abstand des unteren Bereichs zum Schwerpunkt in einem Bereich von etwa 1,1 bis 2 liegt. Dies kann beispielsweise dadurch erreicht werden, dass das Druckstück relativ zur oberen Anlagefläche in der Kettenlasche gekippt in die Öffnung der Kettenlasche eingesetzt wird und sich somit die Wälzfläche in Druckstückhöhenrichtung betrachtet in Richtung oberhalb des Schwerpunkts des Druckstücks verlagert.

Um nun eine Anpassung der Anlageflächen der Druckstücke und der Kettenlaschen vor der Verwendung der Laschenkette an einem Fahrzeugantrieb, also beispielsweise dem Einbau der Laschenkette in einem Kegelscheibenumschlingungsgetriebe, zu erreichen, ist es nach der vorliegenden Erfindung vorgesehen, dass die Laschenkette vor ihrer Anordnung in dem genannten Fahrzeugantrieb vorgereckt wird. Damit wird durch diesen Reck- oder Streckvorgang der Laschenkette ein aufeinander Einlaufen der Anlageflächen der Druckstücke und der Kettenlaschen vor dem eigentlichen Einsatz der Laschenkette erreicht.

Wird nun der Wälzflächenabstand zweier in einer Kettenlasche an den Anlageflächen angeordneter Druckstücke gemessen, also der Abstand zwischeneiner im rechten Winkel zur Laufrichtung der Laschenkette an einer Wälzfläche eines Druckstücks anliegenden Tangentialfläche zu der Tangentialfläche an der Wälzfläche des am anderen Ende der Öffnung der Kettenlasche an den Anlageflächen anliegenden Druckstücks, so ist es nach der vorliegenden Erfindung vorgesehen, dass dieser Abstand zwischen den Wälzflächen von zwei an den Anlageflächen einer Kettenlasche anliegenden Druckstück größer ist als ein Wälzflächenradius am Druckstück. Der Wälzflächenradius entspricht dabei dem Radius der Wälzfläche im gekrümmten Bereich.

Um nun ein akustisch vorteilhaftes Verhalten der erfindungsgemäßen Laschenkette ohne Einzeltonhaltigkeit zu erreichen, ist es nach der vorliegenden Erfindung vorgesehen, dass die Laschenkette Kettenlaschen mit unterschiedlichen Laschenlängen besitzt.

Die Erfindung wird nun im Folgenden anhand der Zeichnung näher erläutert. Diese zeigt in:
- Fig. 1: eine schematische Darstellung eines Druckstücks mit Wälzfläche einer bekannten Laschenkette;
- Fig. 2: eine Darstellung ähnlich Fig. 1 eines Druckstücks einer erfindungsgemäßen Laschenkette;
- Fig. 3: einen Ausschnitt einer erfindungsgemäßen Laschenkette im Knickfall;
- Fig. 4: eine Darstellung ähnlich Fig. 3, die einen Ausschnitt einer erfindungsgemäßen Laschenkette im langgestreckten Zustand zeigt;
- Fig. 5: eine Kettenlasche einer bekannten Laschenkette zur Erläuterung der Flächenpressungen im Anlageflächenbereich;
- Fig. 6: eine Darstellung ähnlich Fig. 5, die eine Kettenlasche der erfindungsgemäßen Laschenkette zeigt mit Darstellungen der Flächenpressungen in den Anlageflächenbereichen; und
- Fig. 7: eine Gegenüberstellung gemessener Laschenkraftverläufe einer bekannten Laschenkette und der erfindungsgemäßen Laschenkette.

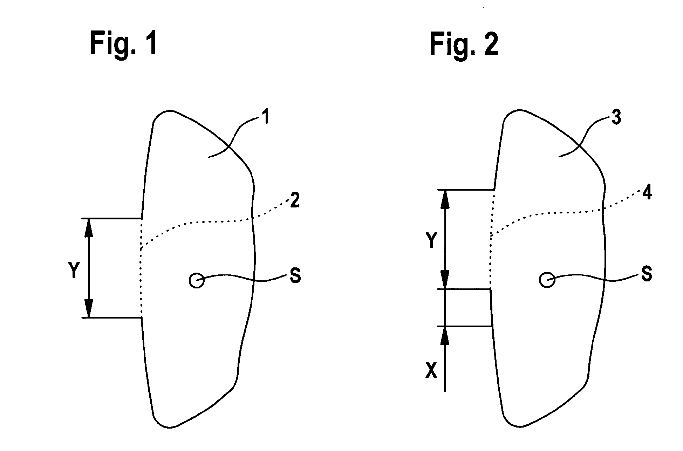

Fig. 1 zeigt in einer schematischen Darstellung ein Druckstück 1 einer bekannten Laschenkette. Das Druckstück 1 besitzt einen Schwerpunkt S und eine Wälzfläche 2, deren Länge mit Y bezeichnet ist. Wie es ohne Weiteres anhand von Fig. 1 ersichtlich ist, erstreckt sich die Wälzfläche 2 nahezu symmetrisch zum Schwerpunkt S.

Fig. 2 der Zeichnung hingegen zeigt ein Druckstück 3 nach einer Ausführungsform einer Laschenkette gemäß der vorliegenden Erfindung. Auch das Druckstück 3 besitzt eine Wälzfläche 4 mit einer Länge Y, die aber um den Betrag X in Richtung der Druckstückhöhenrichtung nach oben verschoben worden ist.

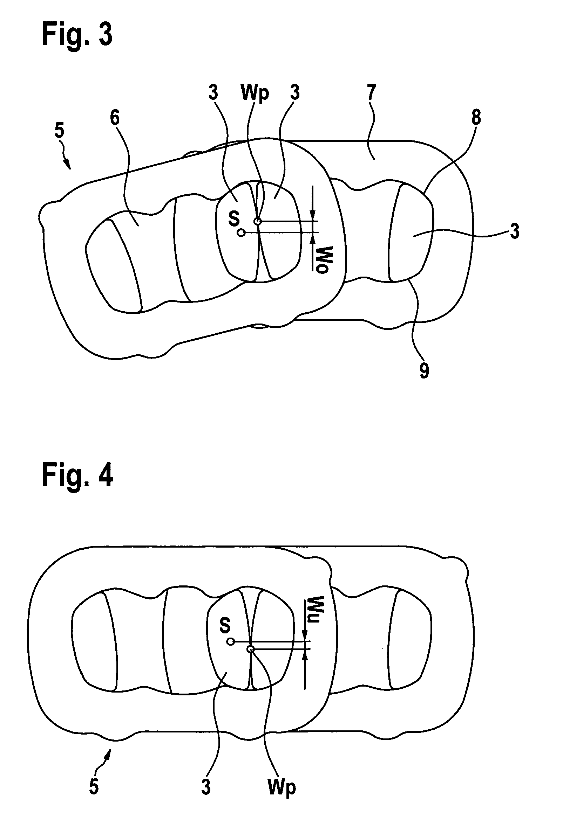

Wird nun das in Fig. 2 der Zeichnung dargestellte Druckstück in einer erfindungsgemäßen Laschenkette verwendet, so stellt sich im Knickfall der in Fig. 3 als Ausschnitt dargestellten Laschenkette 5 die Situation ein, dass sich ein Wälzpunkt Wp zwischen zwei Druckstücken 3 in den Bereich des oberen Endes der Wälzfläche 4 verlagert. Im Knickfall besitzt daher der Wälzpunkt Wp einen Abstand vom Schwerpunkt S des Druckstücks 3, der in Fig. 3 der Zeichnung mit Wo bezeichnet wird. Der Wälzpunkt Wp befindet sich in dieser Lage am Ende des oberen Bereichs der Wälzfläche angeordnet und im Abstand Wo zum Schwerpunkt S. Die Druckstücke 3 befinden sich dabei in Öffnungen 6 der Kettenlaschen 7 angeordnet und zwar derart, dass die Druckstücke 3 an oberen Anlageflächen 8 und unteren Anlageflächen 9 anliegen und einander gegenüberliegende Druckstückpaar angeordnete Druckstücke 3 an der Wälzfläche 4 abwälzen können.

Nimmt nun die Laschenkette 5 nach der Umlenkung zwischen einem nicht näher dargestellten Kegelscheibenpaar eine in Fig. 4 der Zeichnung dargestellte langgestreckte Konfiguration ein, so verschiebt sich der Wälzpunkt Wp von der in Fig. 3 der Zeichnung dargestellten Lage oberhalb des Schwerpunkts zu der in Fig. 4 der Zeichnung dargestellten Lage unterhalb des Schwerpunkts S des Druckstücks 3. Der Abstand des Wälzpunktes Wp vom Schwerpunkt S in der langgestreckten Konfiguration der Laschenkette 5 ist in Fig. 4 der Zeichnung mit Wu bezeichnet und ist kleiner als der in Fig. 3 mit Wo bezeichnete Abstand des Wälzpunktes Wp vom Schwerpunkt S in der abgewinkelten Konfiguration der Laschenkette 5. Es hat sich nun als vorteilhaft herausgestellt, wenn das Verhältnis aus dem Abstand Wo des Endes des oberen Bereichs zum Schwerpunkt und dem Abstand Wu des Endes des unteren Bereichs zum Schwerpunkt in einem Bereich von etwa 1,1 bis etwa 2 liegt.

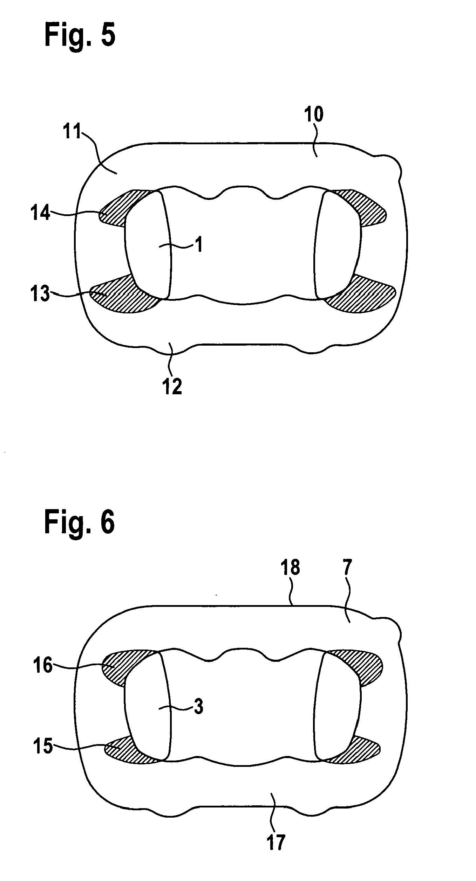

Fig. 5 der Zeichnung zeigt eine Kettenlasche 10 einer bekannten Laschenkette mit einem Druckstück 1 und einer Darstellung der Flächenpressung im Anlageflächenbereich zwischen dem Druckstück 1 und der Kettenlasche 10. Wie es ohne weiteres ersichtlich ist, ist die Flächenpressung in dem mit dem Bezugszeichen 13 bezeichneten schraffierten Bereich der unteren Anlagefläche zwischen dem Druckstück 1 und dem unteren Bügel 12 deutlich größer als die Flächenpressung in dem mit dem Bezugszeichen 14 bezeichneten schraffierten Bereich zwischen dem Druckstück 1 und dem oberen Bügel 11 der Kettenlasche 10.

Fig. 6 hingegen zeigt eine ähnliche Darstellung einer Kettenlasche 7 mit einem darin angeordneten Druckstück 3 und einem mit dem Bezugszeichen 15 bezeichneten schraffierten Bereich, der die Flächenpressung zwischen dem Druckstück 3 und dem unteren Bügel 17 der Kettenlasche 7 zeigt. Ein Vergleich der schraffierten Fläche 13 aus Fig. 5 und der schraffierten Fläche 15 aus Fig. 6 zeigt nun, dass die schraffierte Fläche 15 deutlich kleiner ist als die schraffierte Fläche 13, woraus sich sofort ergibt, dass die Flächenpressung in dem unteren Anlageflächenbereich des Druckstücks 3 und des unteren Bügels 17 kleiner ist als die entsprechende Flächenpressung 13.

Auch zeigt sich, dass die im schraffierten Bereich 15 dargestellte Flächenpressung weitgehend der mit dem Bezugszeichen 16 bezeichneten schraffierten Fläche entspricht, die die Flächenpressung zwischen dem Druckstück 3 und dem oberen Bügel 18 der Kettenlasche 7 repräsentiert. Ein Vergleich der Fig. 5 und der Fig. 6 zeigt nun sofort und ohne Weiteres, dass das in Fig. 5 noch ersichtliche Ungleichgewicht zwischen den Flächenpressungen in den Bereichen 13 und 14 verschwunden ist und die Flächenpressungen in den schraffierten Bereichen 15 und 16 nach Fig. 6 weitgehend gleich sind. Daraus resultiert, dass die Materialbelastung der Kettenlasche 7 verringert worden ist und dementsprechend erhöht sich die Lebensdauer bzw. die Momentenübertragungskapazität der Laschenkette 5.

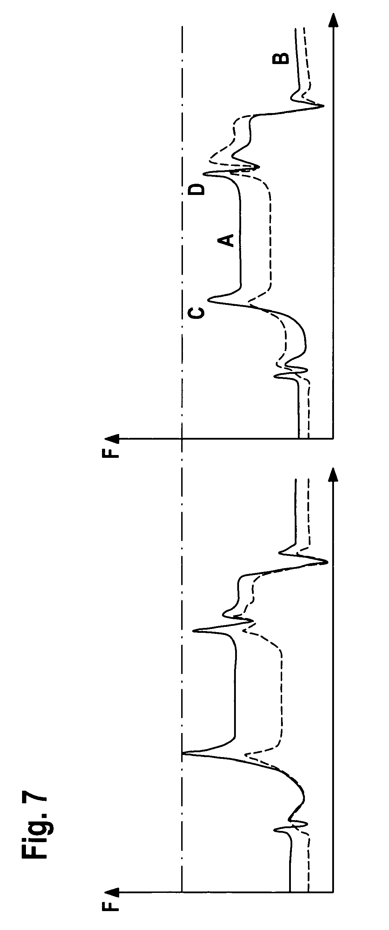

Fig. 7 der Zeichnung nun zeigt eine Gegenüberstellung des Laschenkraftverlaufs im oberen Bügel und im unteren Bügel einer bekannten Laschenkette - dies entspricht der linken Abbildung in Fig. 7 und der erfindungsgemäßen Laschenkette - dies entspricht der rechten Abbildung in Fig. 7. Die Kraftverläufe entsprechen dabei den Zugkraftverläufen, die mit Dehnungs-Messstreifen während eines Umlaufs einer bekannten Laschenkette und einer erfindungsgemäßen Laschenkette im Versuch erfasst worden sind und in den entsprechenden Abbildungen dargestellt wurden.

Es zeigt sich sofort, dass sich bei den in der rechten Hälfte der Fig. 7 dargestellten Kraftverläufen ein niedrigeres Niveau der gemessenen Laschenkraftverläufe insbesondere im unteren Bügel eingestellt hat. Dies deckt sich mit der Darstellung in Fig. 5 und Fig. 6 der Zeichnung. Nicht nur die Plateaus A und B - die dem gestreckten Zustand der Laschenkette entsprechen - sondern auch in den mit C und mit D bezeichneten Bereichen hat sich die gemessene Laschenkraft verringert. Im Bereich C und D erfolgt eine Veränderung der Zugkraft, der eine Veränderung des Knickzustandes überlagert ist. Das Zusammenspiel der beiden Veränderungen ist überraschend und zeigt einen deutlich verringerten Laschenkraftverlauf über einen Umlauf der Laschenkette.

Hinsichtlich vorstehend im Einzelnen nicht näher erläuterter Merkmale der Erfindung wird im Übrigen ausdrücklich auf die Ansprüche und die Zeichnung verwiesen.

### Bezugszeichenliste

- 1: Druckstück
- 2: Wälzfläche
- 3: Druckstück
- 4: Wälzfläche
- 5: Laschenkette
- 6: Öffnung
- 7: Kettenlasche
- 8: obere Anlagefläche
- 9: untere Anlagefläche
- 10: Kettenlasche
- 11: oberer Bügel
- 12: unterer Bügel
- 13: schraffierter Bereich
- 14: schraffierter Bereich
- 15: schraffierter Bereich
- 16: schraffierter Bereich
- 17: unterer Bügel
- 18: oberer Bügel
- S: Schwerpunkt
- Y: Länge der Wälzfläche
- X: Betrag
- Wp: Wälzpunkt
- Wo: Abstand des oberen Endes des oberen Bereichs zum Schwerpunkt S
- Wu: Abstand des Endes des unteren Bereichs zum Schwerpunkt S

## Patentansprüche

1. Laschenkette (5) für insbesondere einen Fahrzeugantrieb, mit einer Vielzahl von über Druckstücke (3) gelenkig miteinander verbundenen Kettenlaschen (10), wobei die Druckstücke (3) quer zur Längsrichtung der Laschenkette (5) verlaufen und in Öffnungen (6) der Kettenlaschen (10) angeordnet sind und an den Druckstücken (3) und den Kettenlaschen (7) jeweilige gekrümmt ausgebildete Anlageflächen angeordnet sind, entlang derer die Druckstücke (3) und Kettenlaschen (7) zur Kraftübertragung aneinander anliegen und die Anlageflächen am in Druckstückhöhenrichtung oberen und unteren Kontaktflächenbereich zwischen Druckstück (1) und Kettenlasche (7) vorgesehen sind und an den Druckstücken (3) gekrümmt ausgebildete Wälzflächen (4) angeordnet sind, entlang derer die Druckstücke (3) zur Kraftübertragung aneinander abwälzen und sich die Wälzflächen (4) in einem in Längsrichtung der Laschenkette (5) durch einen Schwerpunkt (S) des Druckstückes (1) verlaufenden Querschnitt in einen oberen Bereich oberhalb und einen unteren Bereich unterhalb der Querschnittsebene erstrecken, **dadurch gekennzeichnet, dass** das Verhältnis aus dem Abstand (Wo) des Endes des oberen Bereichs zum Schwerpunkt (S) und dem Abstand (Wu) des Endes des unteren Bereiches zum Schwerpunkt (S) in einem Bereich von etwa 1,1 bis etwa 2 liegt.

2. Laschenkette nach Anspruch 1, **dadurch gekennzeichnet, dass** die Wälzfläche (4) des Druckstückes (3) derart ausgebildet ist, dass das Ende des oberen Bereiches bei maximalem Knickwinkel der Laschenkette (5) einen Abstand zum Schwerpunkt (S) des Druckstückes (3) besitzt, der etwa dem 1,1 bis etwa 2-fachen Abstand des Endes des unteren Bereiches zum Schwerpunkt (S) bei gestreckter oder in zur Richtung bei maximalem Knickwinkel entgegengesetzter Richtung gekrümmter Laschenkette (5) entspricht.

3. Laschenkette nach Anspruch 1, **dadurch gekennzeichnet, dass** die Druckstücke (3) an den Anlageflächen (8, 9) der Kettenlaschen (7) derart anliegen, dass das Verhältnis aus dem Abstand des Endes des oberen Bereichs zum Schwerpunkt (S) (Wo) und dem Abstand des Endes des unteren Bereiches zum Schwerpunkt (S) (Wu) in einem Bereich von etwa 1,1 bis etwa 2 liegt.

4. Laschenkette nach einem der vorstehenden Ansprüche, **dadurch gekennzeichnet, dass** die Laschenkette (5) vor der Anordnung in einem Fahrzeugantrieb vorgereckt ist.

5. Laschenkette nach einem der vorstehenden Ansprüche, **dadurch gekennzeichnet, dass** ein Wälzflächenradius am Druckstück (3) kleiner ist als ein Abstand zwischen Wälzflächen (4) von zwei an den Anlageflächen (8, 9) einer Kettenlasche (7) anliegenden Druckstücken (3).

6. Laschenkette (5) nach einem der vorstehenden Ansprüche, **dadurch gekennzeichnet, dass** die Laschenkette (5) Kettenlaschen (7) mit unterschiedlichen Laschenlängen besitzt.
